# EUROPEAN PATENT APPLICATION

(11) **EP 4 826 478 A1**
(43) Date of publication of application: **21.10.2026**
(21) Application number: 26166000.5
(22) Date of filing: 19.03.2026
(51) Int. Cl.: G05B 23/02

(54) **USER INTERFACE CONTROL TREE FILTERING IN INDUSTRIAL AUTOMATION ENVIRONMENTS**

(30) Priority: 16.04.2025 US 202519180791
(71) Applicant: Rockwell Automation Technologies, Inc., Mayfield Heights, OH 44124 (US)
(72) Inventor: Yan, Fei, Mayfield Heights, OH, 44124 (US); Jia, Sinan, Mayfield Heights, OH, 44124 (US); Giordano, Matthew C., Mayfield Heights, OH, 44124 (US)
(74) Representative: Grünecker Patent- und Rechtsanwälte PartG mbB

(57) **Abstract**

Various embodiments include a system that comprises processing circuitry of a management system in an industrial automation environment. The processing circuitry provides a graphical user interface for comparing performance of different portions of the industrial automation environment. The graphical user interface comprises functionality. The functionality comprises displaying a control tree that represents a hierarchy of the industrial automation environment. The control tree comprises items that correspond to the levels of the hierarchy. The functionality further comprises filtering the items of the control tree based on the levels in response to receiving a user input. The functionality further comprises displaying a list of the filtered items that correspond to the user selected level. The functionality further comprises concealing the control tree to hide items that do not correspond to the user selected level.

## Description

### TECHNICAL FIELD

Various implementations disclosed herein relate to industrial automation environments, and more specifically, to filtering user interface hierarchical control trees in industrial automation environments.

### BACKGROUND

Industrial automation environments comprise computing and mechanical systems configured to implement an industrial process. In industrial automation environments, control systems are used to drive various operations along an industrial line. Control programs are developed by programmers in the Integrated Design Environment (IDE) using design applications. The design applications comprise programming tools to design control programs for the industrial manufacturing environments. The control programs comprise logic to control industrial devices to carry out an industrial operation. The control programs are executed by control systems like Programmable Logic Controllers (PLCs) to drive the industrial assets, devices, and sensors in the industrial process. The industrial assets, devices, and sensors generate process data characterizing their performance and transfer the data for delivery to a management system. The management system provides a user interface that depicts the data to allow operators to assess the performance of the industrial automation environment.

Industrial automation environments may be organized into a hierarchy of levels. The levels typically include the enterprise level, the site level, the area level, line level, and the cell level. The enterprise comprises one or more sites, the sites comprise one or more areas, the areas comprise one or more lines, and the lines comprise one or more cells. The user interface of the management system organizes the process data based on the levels using a hierarchical control tree. Industrial automation environments are large and complex systems. As such, the control trees are cumbersome and difficult to navigate given the large number of items needed to depict an industrial automation environment. The cumbersome nature of the control trees makes it difficult to select and compare items in the control tree that correspond to disparate parts of the industrial automation environment. Unfortunately, industrial automation environments do not provide user interfaces that effectively and efficiently compare performance metrics for different portions of the industrial automation environments.

### OVERVIEW

This Overview is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

Various embodiments of the present technology generally relate to solutions for industrial automation environments. Some embodiments comprise a method. The method comprises providing, via a management system of an industrial automation environment, a graphical user interface for comparing performance of different portions of the industrial automation environment. The graphical user interface comprises functionality. The functionality comprises displaying a control tree that represents a hierarchy of the industrial automation environment. The control tree comprises items that correspond to the levels of the hierarchy. The functionality further comprises filtering the items of the control tree based on the levels in response to receiving a user input. The functionality further comprises displaying a list of the filtered items that correspond to the user selected level. The functionality further comprises concealing the control tree to hide items that do not correspond to the user selected level.

Some embodiments comprise a system. The system comprises processing circuitry of a management system in an industrial automation environment. The processing circuitry provides a graphical user interface for comparing performance of different portions of the industrial automation environment. The graphical user interface comprises functionality. The functionality comprises displaying a control tree that represents a hierarchy of the industrial automation environment. The control tree comprises items that correspond to the levels of the hierarchy. The functionality further comprises filtering the items of the control tree based on the levels in response to receiving a user input. The functionality further comprises displaying a list of the filtered items that correspond to a user selected one of the levels. The functionality further comprises concealing the control tree to hide ones of the items that do not correspond to the user selected one of the levels.

Some embodiments comprise one or more non-transitory computer readable storage media having program instructions stored thereon. The program instruction, when executed by a computing system, direct the computing system to perform operations. The operations comprise providing a graphical user interface for comparing performance of different portions of an industrial automation environment. The graphical user interface comprises functionality. The functionality comprises displaying a control tree that represents a hierarchy of the industrial automation environment. The control tree comprises items that correspond to the levels of the hierarchy. The functionality further comprises filtering the items of the control tree based on the levels in response to receiving a user input. The functionality further comprises displaying a list of the filtered items that correspond to the user selected level. The functionality further comprises concealing the control tree to hide items that do not correspond to the user selected level.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an example of an industrial automation environment.
Figure 2 illustrates an exemplary operation of the industrial automation environment.
Figure 3 illustrates an example of a user interface.
Figure 4 further illustrates the example of the user interface.
Figure 5 further illustrates the example of the user interface.
Figure 6 illustrates an example of a computing device that may be used in accordance with various embodiments of the present technology.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

In a conventional industrial automation environment, industrial devices generate processes data that characterizes their operation. The industrial devices transfer their process data for delivery to a management system associated with the industrial automation environment. Operators use the management system to assess the operation of the industrial automation environment and to compare the performance of different portions of the automated industrial environment. The management system provides a user interface that displays a control tree that comprises selectable options. The control tree hierarchy organizes the selectable items into a number of levels that correspond to the levels of the industrial automation environment (e.g., enterprise level, site level, area level, line level, and cell level). A user may navigate to a desired item in the control tree and select the item. The user interface then displays performance data for the portion of the industrial automation environment that corresponds to the selected item. Industrial automation environments are large and complex systems and can include large numbers of sites, areas, lines, and cells. As such, the control trees include a correspondingly large number of selectable items. The hierarchical nature of control trees makes navigating them cumbersome and time consuming. The cumbersome nature of the control trees increases the difficulty of selecting and comparing items from different sites, areas, and lines of the industrial automation environment.

To address the above problems in conventional industrial automation environments, various embodiments of the present technology relate to filtering hierarchical control trees. A management system of an industrial automation environment provides a user interface for comparing different portions of the industrial automation environment. The management system receives a user input selecting a level of the industrial automation environment. In response, the management system filters the items of the hierarchical control tree based on the user selected level. The management system generates and displays a filtered list of items within the user selected level and hides items higher up in the control tree hierarchy. This allows a user to quickly select and compare items from the same level across different parent levels in the control tree hierarchy. This increases the ease of user interface navigation, facilitates process data comparison, and improves the overall user experience when compared to traditional hierarchical control trees. Now referring to the Figures.

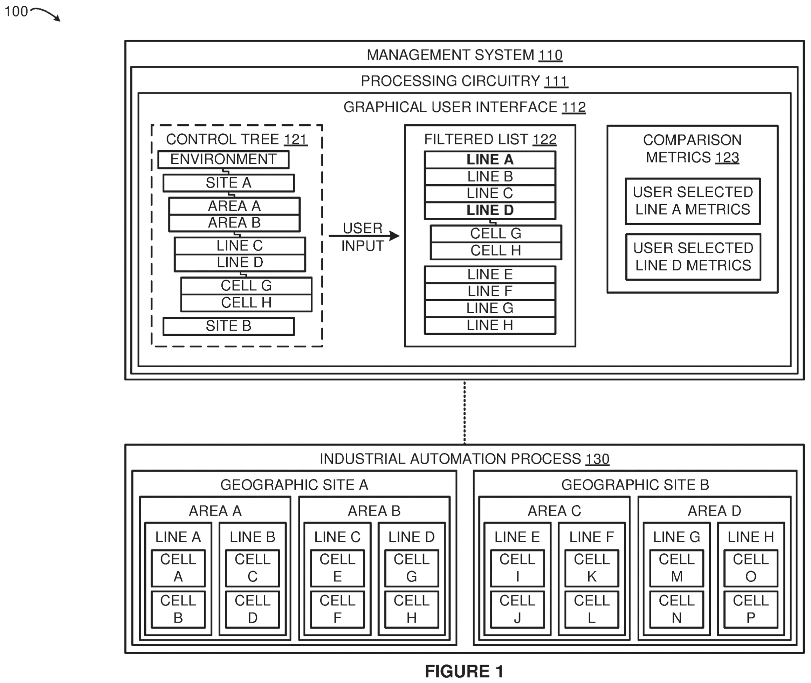

Figure 1 illustrates industrial automation environment 100 to filter control tree hierarchies in industrial automation environments. Industrial automation environment 100 performs services like factory automation, factory control, machine control, smart manufacturing, machine communication and organization, and the like. Industrial automation environment 100 comprises management system 110 and industrial automation process 130. Management system 110 comprises processing circuitry 111 which provides graphical user interface 112. Graphical user interface 112 comprises control tree 121, filtered list 122, and comparison metrics 123. Industrial automation environment 100 typically comprises additional components like Integrated Design Environments (IDEs), orchestration systems, Programmable Logic Controllers (PLCs), Human Machine Interfaces (HMIs), Original Equipment Manufacturer (OEM) devices, and the like, however the additional components are omitted for clarity. In other examples, industrial automation environment 100 may include fewer or additional components than those illustrated in Figure 1. Likewise, the illustrated components of industrial automation environment 100 may include fewer or additional components, assets, or connections than shown. Processing circuitry 111 may be representative of a single computing apparatus or multiple computing apparatuses.

Various embodiments of industrial automation environment configuration and operation are described herein. In some examples, industrial automation process 130 implements an industrial process based on control programs. As illustrated in Figure 1, industrial automation process 130 comprises geographic sites A and B. For example, geographic site A may be representative of a manufacturing facility at a first location and geographic site B may be representative of another manufacturing facility at another location. Each of geographic sites A and B comprise two areas (i.e., areas A-D). The areas are representative of different portions of manufacturing facilities like testing, assembly, packaging, and the like. Each area in geographic sites A and B comprises two lines (i.e., lines A-H). The lines are composed of two cells (i.e., cells A-P). The cells correspond to one or more industrial devices programmed to perform tasks. The industrial devices are typically organized in series forming an assembly line. While each level of process 130 is depicted as having two child levels, industrial automation environments typically comprise many more sites, areas, lines, and cells than depicted in Figure 1.

PLCs (or other types of controllers) in industrial automation process 130 execute control programs and generate corresponding control signaling to drive process 130. The control programs comprise code blocks, ladder logic diagrams, smart objects, or other types of industrial automation code to implement industrial automation process 130. The code blocks, ladder logic, and smart objects correspond to industrial assets, devices, and sensors in industrial automation process 130. The PLCs transfer the control signaling to the industrial assets, devices, and sensors in the cells. The industrial assets, devices, and sensors operate in response to the control signaling and generate process data that characterizes their operations. Industrial automation process 130 reports the process data to management system 110. For example, a PLC may execute a control program that sets an output pressure level of a pump. The PLC may transfer correspond signaling to an actuator in the pump. The control signaling may select an impeller speed correlated with the desired output pressure. The actuator may receive the control signaling and responsively modify the current supplied to the motor that drives the impeller to set the impeller to the selected speed. The actuator may generate and transfer process data that characterizes the amount of current, motor speed, pressure differential, or other operating variables as a function of time for delivery to management system 110.

Processing circuity 111 in management system 110 receives the process data from industrial automation process 130. Processing circuitry 111 provides graphical user interface 112. For example, processing circuitry 111 may execute an industrial asset management program and responsively generate graphical user interface 112 for display on a screen. At first, graphical user interface depicts control tree 121. Control tree 121 comprises a hierarchical arrangement of selectable items that correspond to the different levels of industrial automation process 130. The environment item corresponds to process 130, the site items correspond to geographic sites A and B, the area items correspond to areas A-D in geographic sites A and B, the line items correspond to lines A-H in areas A-D, and the cell items correspond to cells A-P in lines A-H. When selected by a user, an item opens and graphical user interface 112 displays the contents on the item. For example, a user may select the environment item, site A item, area B item, and line B item to reveal the cell A and cell B items. It should be appreciated that some items in control tree 121 are not displayed since a user has not selected that portion of control tree 121. For example, and as depicted in Figure 1, the child items of the site B item in control tree 121 are not displayed since a user has not selected the site B item.

Subsequently, processing circuitry 111 receives a user input to filter the items in control tree 121 based on a user selected level. In this example, the user selected level comprises the line level, however the user selected level may differ in other examples. In response to the user input, processing circuitry 111 filters the items in control tree 121 by level. For example, each item in control tree 121 may comprise an interface or other type of identifier to indicate the level of the item. Processing circuitry 111 selects ones of the items that comprise the user selected level and generates filtered list 122. As illustrated in Figure 1, filtered list 122 comprises a list of line items that correspond to the lines A-H in process 130. Graphical user interface 112 displays filtered list 122 and conceals control tree 121 which hides the items that do not correspond to the user selected level. Typically, graphical user interface 112 hides items in control tree 121 that are higher in the hierarchy than the user selected level. Processing circuitry 111 receives a user input selecting two items (Line A and Lind D shown in bold in Figure 1) from filtered list 122. In response, graphical user interface 112 displays comparison metrics 123. Comparison metrics 123 include process data for lines A and D in process 130 that correspond to the user selected items. As such, a user is able to easily and efficiently compare lines across different geographic sites and different areas in process 130.

Advantageously, graphical user interface 112 effectively and efficiently filters items of a hierarchical control tree based on the levels of the control tree. Moreover, the effective and efficient filtering facilitates user interface navigation and comparing of performance data for disparate parts of industrial automation environment 100.

Industrial automation process 130 is representative of a manufacturing process, chemical production process, food processing process, energy generation process, or any other type of industrial process. Process 130 may comprises a process for manufacturing goods but may also comprise processes occurring within a utility plant (e.g., an electrical power plant), research or laboratory facility (e.g., a sample testing or processing facility), processes occurring within a food processing facility (e.g., a cattle processing plant), processes occurring within a chemical processing facility (e.g., petroleum refinery), or any other suitable industrial automated environment. The cells of industrial automation process 130 comprise factory or industrial machinery or manufacturing equipment such as conveyor belts or other conveyance mechanisms, robotic devices or other automated or programmable devices, packaging devices including boxing, capping, and sealing equipment, processing equipment, mixers, filling stations, quality control equipment, pumps, compressors, heat exchanges, centrifuges, turbines, mills, conveyers, filters, generators, reactors, distillation systems, food processing systems, and/or other devices associated with manufacturing or other industrial processes. The industrial devices of the cells may comprise subcomponents like motors, actuators, valves, electrical circuitry, processing circuitry, storage circuitry, transceivers, machined parts, and the like.

Processing circuitry 111 and industrial automation process 130 communicate over various communication links using communication technologies like industrial ethernet, Institute of Electrical and Electronic Engineers (IEEE) 802.3 (Ethernet), IEEE 802.11 (WiFi), Bluetooth, Time Division Multiplex (TDM), Data Over Cable System Interface Specification (DOCSIS), Internet Protocol (IP), General Packet Radio Service Transfer Protocol (GTP), and/or some other type of wireline and/or wireless networking protocol. The communication links comprise metallic links, glass fibers, radio channels, or some other communication media. The links use Ethernet, WiFi, virtual switching, inter-processor communication, bus interfaces, and/or some other data communication protocols.

Graphical user interface 112 is representative of a display that provides a graphical representation of items that correspond to the layers of industrial automation process 130. Graphical user interface 112 may be generated on a display screen for viewing or use by an operator or similar user within management system 110. Graphical user interface 112 may be displayed on a display screen of a computer, a mobile device, a kiosk, a touchscreen device, or some other type of computing device (e.g., processing circuitry 111) as described herein. A user may interact with graphical user interface 112 via inputs like mouse clicks, keyboard inputs, touchscreen inputs, drag-and-drop selections, and the like.

Processing circuitry 111 and industrial automation process 130 comprise microprocessors, software, memories, transceivers, bus circuitry, and the like. The microprocessors comprise Central Processing Units (CPUs), Graphical Processing Units (GPUs), Digital Signal Processors (DSPs), Application-Specific Integrated Circuits (ASICs), Field Programmable Gate Arrays (FPGAs), analog computing circuits, and/or the like. The memories comprise Random Access Memory (RAM), flash circuitry, Hard Disk Drives (HDDs), Solid State Drives (SSDs), Non-Volatile Memory Express (NVMe) SSDs, and/or the like. The memories store software like operating systems, management applications, user applications, networking applications, control applications, security applications, machine learning applications, and the like. The microprocessors retrieve the software from the memories and execute the software to drive the operation of industrial automation environment 100 as described herein.

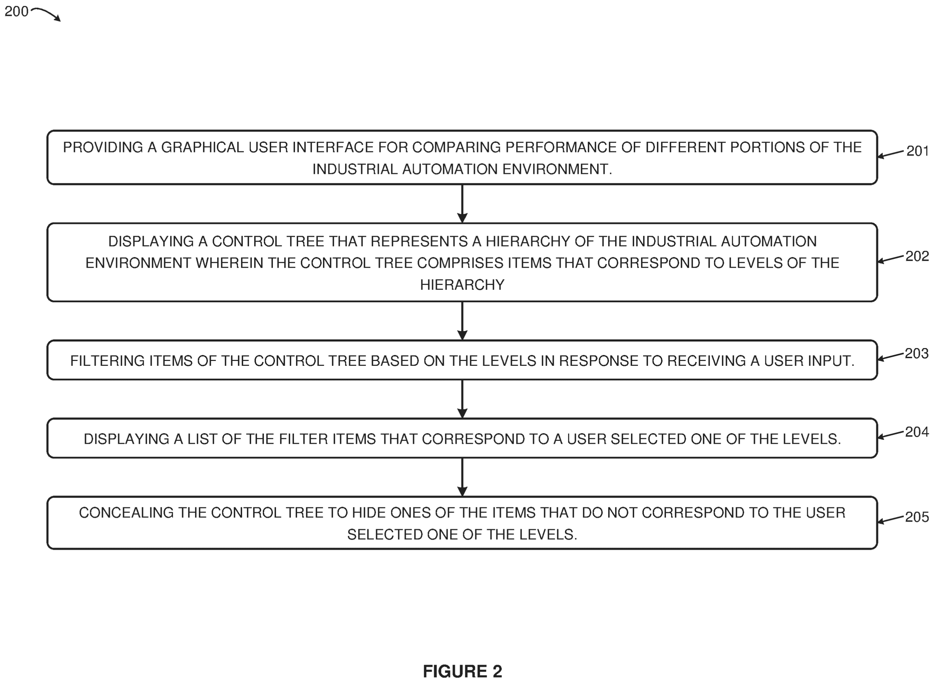

In some examples, industrial automation environment 100 implements process 200 illustrated in Figure 2. It should be appreciated that the structure and operation of industrial automation environment 100 may differ in other examples.

Figure 2 illustrates process 200. Process 200 comprises an exemplary operation of industrial automation environment 100 to filter control tree hierarchies (e.g., control tree 121) in industrial automation environments. Process 200 may vary in other examples. The operations of process 200 comprise providing a graphical user interface (e.g., graphical user interface 112) for comparing performance of different portions of the industrial automation environment (e.g., industrial automation process 130) (step 201). The operations further comprise displaying a control tree (e.g., control tree 121) that represents a hierarchy of the industrial automation environment wherein the control tree comprises items that correspond to levels (e.g., Geographic Sites A-B, Areas A-D, Lines A-H, and Cells A-P) of the hierarchy (step 202). The operations further comprise filtering items of the control tree based on the levels in response to receiving a user input (step 203). The operations further comprise displaying a list of the filtered items (e.g., filtered list 122) that correspond to a user selected one of the levels (step 204). The operations further comprise concealing the control tree to hide ones of the items that do not correspond to the user selected one of the levels (step 205).

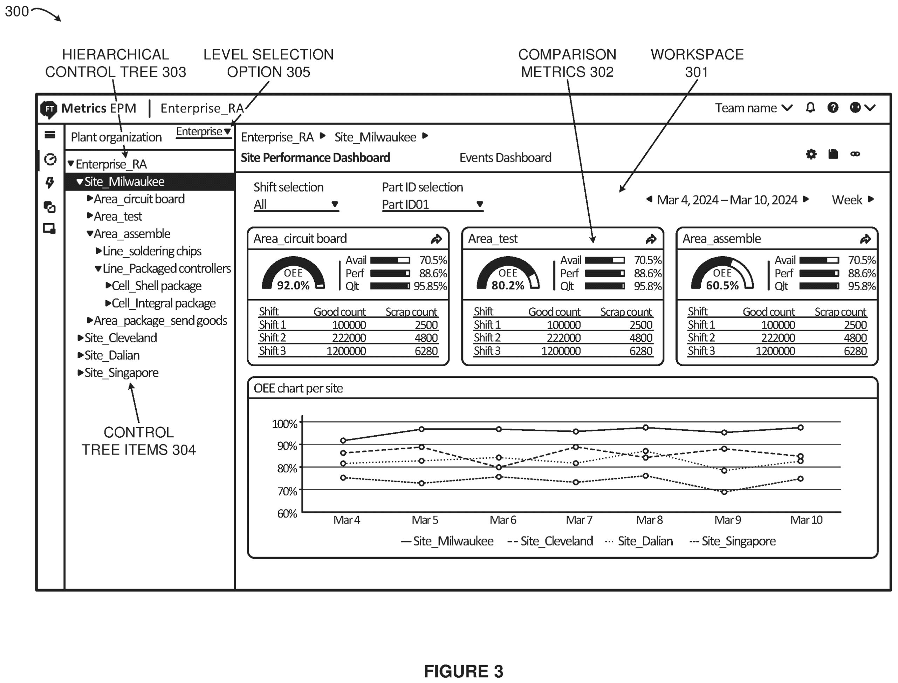

Figure 3 illustrates user interface 300. User interface 300 comprises an example of graphical user interface 112 illustrated in Figure 1, however graphical user interface 112 may differ. User interface 300 comprises workspace 301, comparison metrics 302, hierarchical control tree 303, control tree items 304, and level selection option 305. Comparison metrics 302 comprise an example of comparison metrics 123 illustrated in Figure 1, however comparison metrics 123 may differ. Control tree 303 comprises an example of control tree 121 illustrated in Figure 1, however control tree 121 may differ. Control tree items 304 comprise an example of the items included in control tree 121 illustrated in Figure 1, however the items included in control tree 121 may differ. Workspace 301, comparison metrics 302, hierarchical control tree 303, control tree items 304, level selection option 305, and/or the other display elements included in user interface 300 may differ in other examples.

User interface 300 is representative of a display that provides a graphical representation of a management application to compare performance of different components of an automated industrial environment. User interface 300 may be generated on a display screen for viewing or use by an operator or similar user within a management system of an industrial automation environment. For example, user interface 300 may be displayed on a display screen of a computer, a mobile device, a kiosk, a touchscreen device, or some other type of computing device as described herein. A user may interact with the management application via user interface 300 using inputs like mouse clicks, keyboard inputs, touchscreen inputs, and the like to assess the performance of different parts of an industrial process. The management application may receive performance data generated by industrial assets, sensors, and/or devices, derive performance metrics from the data, and display the performance metrics for different devices (or collections of devices) on user interface 300 for comparison by a user.

Workspace 301 comprises a display element of a management application that allows a user to compare the performance of different sites, areas, lines, and cells in an industrial automation environment. In this example, workspace 301 includes comparison metrics 302 for three different areas in the industrial automation environment. Workspace 301 is located in a central portion of user interface 300 but may be located in another portion of user interface 300 in other examples. Workspace 301 includes selectable options to modify the shift, part, and timer period of comparison metrics 302. Workspace 301 may include additional selectable options in other examples. Comparison metrics 302 depict the availability, performance, quality, and Overall Equipment Effectiveness (OEE) for three different areas (Area_circuit board, Area_test, and Area_assemble) of the industrial automation environment. The OEE may be defined as the product of the availability, performance, and quality. Comparison metrics 302 also includes a chart that depicts the change in overall operation efficiency over time for different geographic sites in the industrial automation environment. Comparison metrics 302 typically displays metrics based on user selections. For example, a user may select three of control tree items 304 in hierarchical control tree 303 and user interface 300 may responsively display comparison metrics 302 that includes the metrics for the three areas based on the user selection. It should be appreciated that comparison metrics 302 may differ in other examples.

Hierarchical control tree 303 comprises a set of selectable items (i.e., control tree items 304) arranged in a hierarchy based on the levels of an industrial automation environment. Typically, industrial automation environments comprise an enterprise level, site level, area level, line level, and cell level. The cell level comprises one or more industrial devices programmed to perform an operation on an assembly line. The line level encompasses a set of cells forming an assembly line. The area level corresponds to a collection of assembly lines to perform an industrial process. For example, a first area may comprise a set of assembly lines to assemble a physical product while a second area may comprise a set of assembly lines to package the product. The site level encompasses one or more areas and is representative of an industrial facility at a geographic location. For example, a first site level may represent a chemical production plant in a first city and a second site level may represent a material refining plant in a second city. The enterprise level encompasses all of the sites and is representative of the entire industrial operation. As such, hierarchical control tree 303 comprises items that correspond to the enterprise, site, area, line, and cell level of an industrial automation environment. Hierarchical control tree 303 is located on the left portion of user interface 300 however tree 303 may be located on a different portion of user interface 300 in other examples.

Control tree items 304 comprise an enterprise item (Enterprise_RA), site items (Site_Milwaukee, Site_Cleveland, Site_Dalian, and Site_Singapore), area items (Area_circuit board, Area_test, and Area_assemble), line items (Line_soldering chips and Line_Packaged controllers), and cell items (Cell_Shell package and Cell_Integral package). Control tree items 304 are selectable. Upon selection, control tree items 304 open to reveal their contents. In this example, a user has selected the Enterprise_RA item, the Area_asssemble item, and the Line_Packaged controllers item to reveal the Cell_Shell package and Cell_Integral package items. It should be appreciated that the ones of control tree items 304 displayed in user interface 300 may differ in other examples (e.g., in response to change in user selection).

Level selection option 305 comprises a selectable option that allows a user to filter control tree items 304 based on their levels. Each of control tree items 304 comprises an identifier indicating the level of each item. When user interface 300 receives an input selecting a level via level selection option 305, the management application reads the identifiers to determine the levels of control tree items 304. The management application then filters control tree items 304 by selecting ones of the items that comprise the user selected level. The management application then modifies user interface 300 to display the selected ones of control tree items 304 and hide the non-selected ones of control tree items 304. As illustrated in Figure 3, a user has selected the enterprise level in level selection option 305. In response, user interface 300 displays all of control tree items 304.

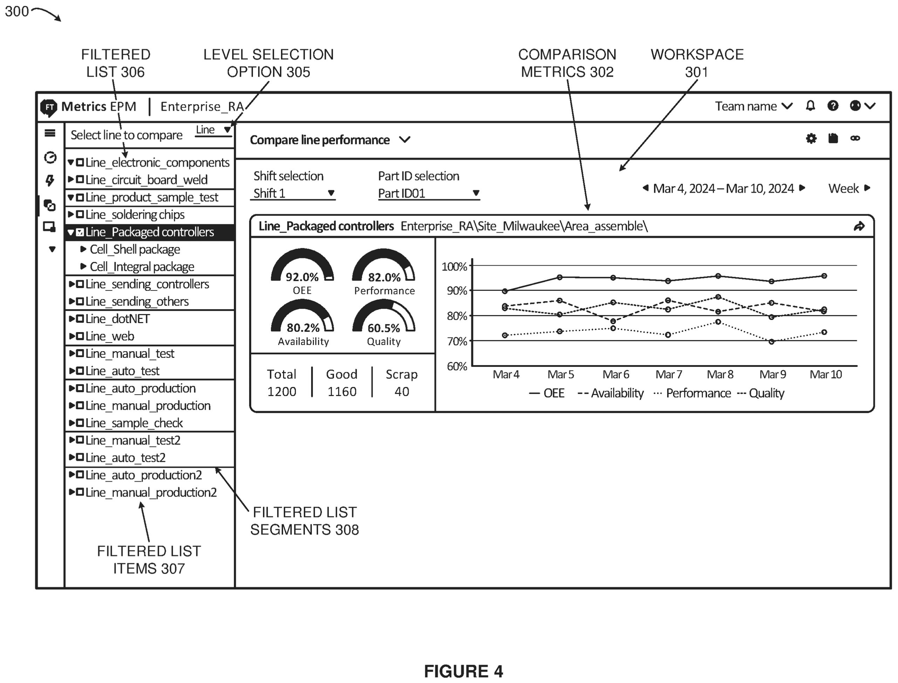

Figure 4 further illustrates user interface 300. User interface 300 comprises filtered list 306, filtered list items 307, and filtered list partitions 308. Filtered list 306 comprises an example of filtered list 122 illustrated in Figure 1, however filtered list 122 may differ. Filtered list items 307 comprise an example of the items included in filtered list 122 illustrated in Figure 1, however the items included in filtered list 122 may differ. In some examples, a user interacts with level selection option 305 and changes the level from enterprise (as depicted in Figure 3) to line. The user may select a different level (e.g., cell) in other examples. In response, the management application filters control tree items 304 based on their level identifiers and selects ones of items 304 that correspond to the line level to generate filtered list 306. User interface 300 modifies its display to hide hierarchical control tree 303 and hierarchical control tree items 304 and displays filtered list 306. Filtered list 306 comprises all of control tree items 304 that correspond to the line level (represented as filtered list items 307). Filtered list 306 includes filtered list partitions 308 which groups ones of filtered list items 307 that share parent items. For example, Line_electronic components and Line_circuit_board components of filtered list items 307 may both be child items of Area_circuit board of control tree items 304. In response, Line_electronic components and Line_circuit_board components are grouped into one of filtered list partitions 308 based on their shared parent area. Advantageously, filtered list 306 allows a user to easily navigate across a single level of hierarchical control tree 303 to compare items on the same level and filtered list partitions 308 allow a user to easily identify which ones of filtered list items 307 share parent items. These advantages reduce or eliminate the cumbersome process of navigating hierarchical control trees which facilitates the comparison of cells from different lines, lines from different areas, and areas from different sites of an industrial automation environment.

In this example, a user has selected the Line_Packaged controllers item of filtered list items 307. The management application modifies filtered list 306 to display the child items (Cell_Shell package and Cell_Integral package) of the selected item. The management application also modifies comparison metrics 302 to display performance metrics for the selected one of filtered list items 307. The user may select additional ones of filtered list items 307, and the management application may modify comparison metrics 302 to include performance metrics for the additional selections to allow the user to compare performance metrics of different lines from different areas of the industrial automation environment. For example, a user may select the Line_auto_test2 item from filtered list 306 and the management application may display performance data for the Line_auto_test2 item in comparison metrics 302. This allows the user to easily and efficiently compare performance data for Line_Packaged controllers item and the Line_auto_test2 item even though these items are from different areas (and potentially sites) of the industrial automation environment.

In some examples, the user may wish to alter the initial selection in level selection option 305. For example, after selecting the line level, the user may decide to filter to the area level and interact with level selection option 305 to input this selection. In response, the management application refilters control tree items 304 based on the new level selection and their level identifiers and selects ones of items 304 that correspond to the new level selection. The management application modifies filtered list 306 to display the refiltered ones of items 304. User interface 300 modifies its display to include the modified filtered list 306.

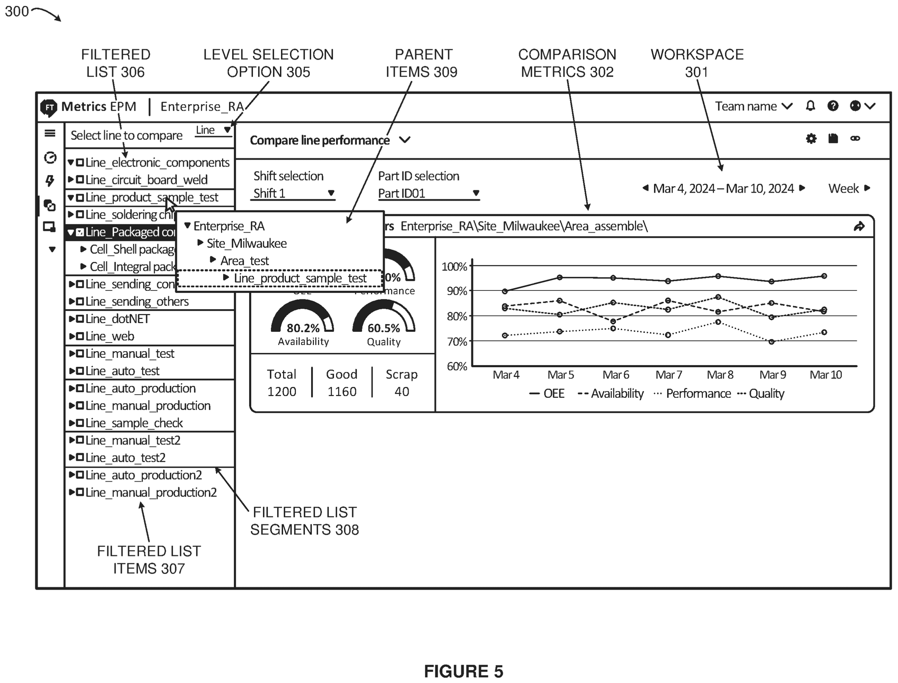

Figure 5 further illustrates user interface 300. User interface 300 comprises parent items 309. In some examples, a user hovers over or otherwise indicates one of filtered list items 307. In this example, the user indicates the Line_product_sample_test item of filtered list items 307. In response, the management application determines the parent items in hierarchical control tree 303 of the indicated item and modifies user interface 300 to display parent items 309. Parent items 309 indicate the line, area, site, and enterprise of the indicated item. As such, parent items 309 allow the user to determine the location of a selected item within the hierarchy of the automated industrial environment when hierarchical control tree 303 is hidden.

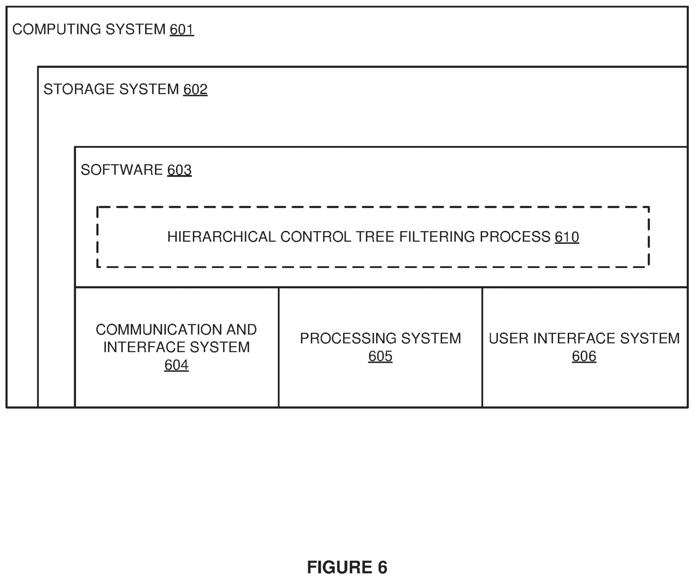

Figure 6 illustrates computing system 601 according to an implementation of the present technology. Computing system 601 is representative of any system or collection of systems with which the various operational architectures, processes, scenarios, and sequences disclosed herein for filtering control tree hierarchies in industrial automation environments. For example, computing system 601 may be representative of processing circuitry 111, the computing device providing user interface 300, and/or any other computing device contemplated herein. Computing system 601 may be implemented as a single apparatus, system, or device or may be implemented in a distributed manner as multiple apparatuses, systems, or devices. Computing system 601 includes, but is not limited to, storage system 602, software 603, communication interface system 604, processing system 605, and user interface system 606. Processing system 605 is operatively coupled with storage system 602, communication interface system 604, and user interface system 606.

Processing system 605 loads and executes software 603 from storage system 602. Software 603 includes and hierarchical control tree filtering process 610, which is representative of any of the processes to filter control trees discussed with respect to the preceding Figures, including but not limited to the user interface generation, user-input based control tree filtering, and process data comparison operations described with respect to the preceding Figures. For example, hierarchical control tree filtering process 610 may be representative of process 200 illustrated in Figure 2. When executed by processing system 605 to filter control trees to a desired level of an industrial automation environment, software 603 directs processing system 605 to operate as described herein for at least the various processes, operational scenarios, and sequences discussed in the foregoing implementations. Computing system 601 may optionally include additional devices, features, or functionality not discussed for purposes of brevity.

Processing system 605 may comprise a micro-processor and other circuitry that retrieves and executes software 603 from storage system 602. Processing system 605 may be implemented within a single processing device but may also be distributed across multiple processing devices or sub-systems that cooperate in executing program instructions. Examples of processing system 605 include general purpose CPUs, GPUs, DSPs, ASICs, FPGAs, and logic devices, as well as any other type of processing device, combinations, or variations thereof.

Storage system 602 may comprise any computer readable storage media readable by processing system 605 and capable of storing software 603. Storage system 602 may include volatile, nonvolatile, removable, and/or non-removable media implemented in any method or technology for storage of information, such as computer readable instructions, data structures, program modules, or other data. Examples of storage media include RAM, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 602 may also include computer readable communication media over which at least some of software 603 may be communicated internally or externally. Storage system 602 may be implemented as a single storage device but may also be implemented across multiple storage devices or sub-systems co-located or distributed relative to each other. Storage system 602 may comprise additional elements, such as a controller, capable of communicating with processing system 605 or possibly other systems.

Software 603 (including hierarchical control tree filtering process 610) may be implemented in program instructions and among other functions may, when executed by processing system 605, direct processing system 605 to operate as described with respect to the various operational scenarios, sequences, and processes illustrated herein. For example, software 603 may include program instructions for generating a generating a user interface that displays a control tree and filtering the items of the control tree to display items that correspond to a user selected level as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 603 may include additional processes, programs, or components, such as operating system software, virtualization software, or other application software. Software 603 may also comprise firmware or some other form of machine-readable processing instructions executable by processing system 605.

In general, software 603 may, when loaded into processing system 605 and executed, transform a suitable apparatus, system, or device (of which computing system 601 is representative) overall from a general-purpose computing system into a special-purpose computing system customized to filter control tree items as described herein. Indeed, encoding software 603 on storage system 602 may transform the physical structure of storage system 602. The specific transformation of the physical structure may depend on various factors in different implementations of this description. Examples of such factors may include, but are not limited to, the technology used to implement the storage media of storage system 602 and whether the computer-storage media are characterized as primary or secondary storage, as well as other factors.

For example, if the computer readable storage media are implemented as semiconductor-based memory, software 603 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 604 may include communication connections and devices that allow for communication with other computing systems (not shown) over communication networks (not shown). Examples of connections and devices that together allow for inter-system communication may include network interface cards, antennas, power amplifiers, radiofrequency circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 601 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of networks, or variation thereof. The aforementioned communication networks and protocols are well known and an extended discussion of them is omitted for the sake of brevity.

While some examples provided herein are described in the context of computing devices for filtering hierarchical control trees, it should be understood that the systems and methods described herein are not limited to such embodiments and may apply to a variety of other industrial automation environments and their associated systems. As will be appreciated by one skilled in the art, aspects of the present invention may be embodied as a system, method, computer program product, and other configurable systems. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.
**The following is a list of further preferred embodiments of the invention:**
1. A method comprising:
   providing, via a management system of an industrial automation environment, a graphical user interface for comparing performance of different portions of the industrial automation environment, wherein the graphical user interface comprises functionality; and
   the functionality comprises:
      displaying a control tree that represents a hierarchy of the industrial automation environment wherein the control tree comprises items that correspond to levels of the hierarchy;
      filtering the items of the control tree based on the levels in response to receiving a user input;
      displaying a list of the filtered items that correspond to a user selected one of the levels; and
      concealing the control tree to hide ones of the items that do not correspond to the user selected one of the levels.
2. The method of embodiment 1 wherein:
   each of the items comprises an interface that indicates one of the levels; and
   filtering the items of the control tree based on the levels in response to receiving the user input comprises selecting the filtered items based on their interfaces and the user selected one of the levels.
3. The method of embodiment 1 wherein the functionality further comprises:
   refiltering the items of the control tree in response receiving a subsequent user input; and
   displaying a new list of the refiltered items that corresponds to a new user selected one of the levels.
4. The method of embodiment 1 wherein the functionality further comprises displaying a parent item in the control tree of a user selected one of the filtered items.
5. The method of embodiment 1 wherein the functionality further comprises displaying a child item in the control tree of a user selected one of the filtered items.
6. The method of embodiment 1 wherein the functionality further comprises displaying a first set of metrics for a first user selected one of the filtered items and displaying a second set of metrics for a second user selected one of the filtered items.
7. The method of embodiment 1 wherein the levels comprise enterprise level, site level, area level, line level, and cell level.
8. A system comprising:
   processing circuitry of a management system in an industrial automation environment configured to:
   provide a graphical user interface for comparing performance of different portions of the industrial automation environment, wherein the graphical user interface comprises functionality; and
   the functionality comprises:
      displaying a control tree that represents a hierarchy of the industrial automation environment wherein the control tree comprises items that correspond to levels of the hierarchy;
      filtering the items of the control tree based on the levels in response to receiving a user input;
      displaying a list of the filtered items that correspond to a user selected one of the levels; and
      concealing the control tree to hide ones of the items that do not correspond to the user selected one of the levels.
9. The system of embodiment 8 wherein:
   each of the items comprises an interface that indicates one of the levels; and
   filtering the items of the control tree based on the levels in response to receiving the user input comprises selecting the filtered items based on their interfaces and the user selected one of the levels.
10. The system of embodiment 8 wherein the functionality further comprises:
   refiltering the items of the control tree in response receiving a subsequent user input; and
   displaying a new list of the refiltered items that corresponds to a new user selected one of the levels.
11. The system of embodiment 8 wherein the functionality further comprises displaying a parent item in the control tree of a user selected one of the filtered items.
12. The system of embodiment 8 wherein the functionality further comprises displaying a child item in the control tree of a user selected one of the filtered items.
13. The system of embodiment 8 wherein the functionality further comprises displaying a first set of metrics for a first user selected one of the filtered items and displaying a second set of metrics for a second user selected one of the filtered items.
14. The system of embodiment 8 wherein the levels comprise enterprise level, site level, area level, line level, and cell level.
15. One or more non-transitory computer readable storage media having program instructions stored thereon, wherein the program instruction, when executed by a computing system, direct the computing system to perform operations, the operations comprising:
   providing a graphical user interface for comparing performance of different portions of an industrial automation environment, wherein the graphical user interface comprises functionality; and
   the functionality comprises:
      displaying a control tree that represents a hierarchy of the industrial automation environment wherein the control tree comprises items that correspond to levels of the hierarchy;
      filtering the items of the control tree based on the levels in response to receiving a user input;
      displaying a list of the filtered items that correspond to a user selected one of the levels; and
      concealing the control tree to hide ones of the items that do not correspond to the user selected one of the levels.
16. The computer readable storage media of embodiment 15 wherein:
   each of the items comprises an interface that indicates one of the levels; and
   filtering the items of the control tree based on the levels in response to receiving the user input comprises selecting the filtered items based on their interfaces and the user selected one of the levels.
17. The computer readable storage media of embodiment 15 wherein the functionality further comprises:
   refiltering the items of the control tree in response receiving a subsequent user input; and
   displaying a new list of the refiltered items that corresponds to a new user selected one of the levels.
18. The computer readable storage media of embodiment 15 wherein the functionality further comprises displaying a parent item in the control tree of a user selected one of the filtered items.
19. The computer readable storage media of embodiment 15 wherein the functionality further comprises displaying a child item in the control tree of a user selected one of the filtered items.
20. The computer readable storage media of embodiment 15 wherein the functionality further comprises displaying a first set of metrics for a first user selected one of the filtered items and displaying a second set of metrics for a second user selected one of the filtered items.

## Claims

1. A method comprising:
providing, via a management system of an industrial automation environment, a graphical user interface for comparing performance of different portions of the industrial automation environment, wherein the graphical user interface comprises functionality; and
the functionality comprises:
displaying a control tree that represents a hierarchy of the industrial automation environment wherein the control tree comprises items that correspond to levels of the hierarchy;
filtering the items of the control tree based on the levels in response to receiving a user input;
displaying a list of the filtered items that correspond to a user selected one of the levels; and
concealing the control tree to hide ones of the items that do not correspond to the user selected one of the levels.

2. The method of claim 1 wherein:
each of the items comprises an interface that indicates one of the levels; and
filtering the items of the control tree based on the levels in response to receiving the user input comprises selecting the filtered items based on their interfaces and the user selected one of the levels.

3. The method of one of claims 1 or 2 wherein the functionality further comprises:
refiltering the items of the control tree in response receiving a subsequent user input; and
displaying a new list of the refiltered items that corresponds to a new user selected one of the levels.

4. The method of one of claims 1 to 3 wherein the functionality further comprises displaying a parent item in the control tree of a user selected one of the filtered items.

5. The method of one of claims 1 to 4 wherein the functionality further comprises displaying a child item in the control tree of a user selected one of the filtered items.

6. The method of one of claims 1 to 5 wherein the functionality further comprises displaying a first set of metrics for a first user selected one of the filtered items and displaying a second set of metrics for a second user selected one of the filtered items.

7. The method of one of claims 1 to 6 wherein the levels comprise enterprise level, site level, area level, line level, and cell level.

8. A system comprising:
processing circuitry of a management system in an industrial automation environment configured to:
provide a graphical user interface for comparing performance of different portions of the industrial automation environment, wherein the graphical user interface comprises functionality; and
the functionality comprises:
displaying a control tree that represents a hierarchy of the industrial automation environment wherein the control tree comprises items that correspond to levels of the hierarchy;
filtering the items of the control tree based on the levels in response to receiving a user input;
displaying a list of the filtered items that correspond to a user selected one of the levels; and
concealing the control tree to hide ones of the items that do not correspond to the user selected one of the levels.

9. The system of claim 8 wherein:
each of the items comprises an interface that indicates one of the levels; and
filtering the items of the control tree based on the levels in response to receiving the user input comprises selecting the filtered items based on their interfaces and the user selected one of the levels.

10. The system of one of claims 8 or 9 wherein the functionality further comprises:
refiltering the items of the control tree in response receiving a subsequent user input; and
displaying a new list of the refiltered items that corresponds to a new user selected one of the levels.

11. The system of one of claims 8 or 10 wherein the functionality further comprises displaying a parent item in the control tree of a user selected one of the filtered items.

12. The system of one of claims 8 to 11 wherein the functionality further comprises displaying a child item in the control tree of a user selected one of the filtered items.

13. The system of one of claims 8 to 12 wherein the functionality further comprises displaying a first set of metrics for a first user selected one of the filtered items and displaying a second set of metrics for a second user selected one of the filtered items, or
wherein the levels comprise enterprise level, site level, area level, line level, and cell level.

14. One or more non-transitory computer readable storage media having program instructions stored thereon, wherein the program instruction, when executed by a computing system, direct the computing system to perform operations, the operations comprising:
providing a graphical user interface for comparing performance of different portions of an industrial automation environment, wherein the graphical user interface comprises functionality; and
the functionality comprises:
displaying a control tree that represents a hierarchy of the industrial automation environment wherein the control tree comprises items that correspond to levels of the hierarchy;
filtering the items of the control tree based on the levels in response to receiving a user input;
displaying a list of the filtered items that correspond to a user selected one of the levels; and
concealing the control tree to hide ones of the items that do not correspond to the user selected one of the levels.

15. The computer readable storage media of claim 14 wherein:
each of the items comprises an interface that indicates one of the levels; and
filtering the items of the control tree based on the levels in response to receiving the user input comprises selecting the filtered items based on their interfaces and the user selected one of the levels, or
wherein the functionality further comprises:
refiltering the items of the control tree in response receiving a subsequent user input; and
displaying a new list of the refiltered items that corresponds to a new user selected one of the levels, or
wherein the functionality further comprises displaying a parent item in the control tree of a user selected one of the filtered items, or
wherein the functionality further comprises displaying a child item in the control tree of a user selected one of the filtered items, or
wherein the functionality further comprises displaying a first set of metrics for a first user selected one of the filtered items and displaying a second set of metrics for a second user selected one of the filtered items.
